# EUROPEAN PATENT APPLICATION

(11) **EP 4 231 196 A1**
(43) Date of publication of application: **23.08.2023**
(21) Application number: 22157300.9
(22) Date of filing: 17.02.2022
(51) Int. Cl.: G06K 9/62, G06V 20/56

(54) **METHODS AND APPARATUS FOR TRAINING A MACHINE LEARNING ALGORITHM**

(71) Applicant: Volvo Car Corporation, 40531 Göteborg (SE)
(72) Inventor: Larsson, Daniel, 247 51 Dalby (SE); Cheng, Shirui, 226 53 Lund (SE); Filipski, Dariusz, 242 34 Hörby (SE)
(74) Representative: Nederlandsch Octrooibureau

(57) **Abstract**

The invention relates to a method for training a machine learning algorithm, such as a deep learning algorithm, for correct item identification performed by a computing unit of a vehicle, wherein the computing unit comprises a processor, a machine learning unit, a communication unit, and a memory and wherein the vehicle comprises a sensor. The method comprises the steps of: triggering sensor data collection and controlling the sensor to acquire sensor data, controlling the sensor to transmit the sensor data to the machine learning unit, optionally controlling the machine learning unit to transmit the data and information related to the data to a user interface and controlling the user interface unit to display, on the display of the user interface, the data and instructions to label the data, based on the information related to the data; assigning labelling information to the data; and controlling the machine learning unit to re-train a machine learning algorithm stored in the memory based on the labelling information.

## Description

### FIELD OF THE INVENTION

The invention relates to methods for providing customized driving experiences by supplying extra localized training data for a machine learning algorithm. The invention further relates to an apparatus for supplying extra training data for a machine learning algorithm.

### BACKGROUND OF THE INVENTION

For decades vehicle safety has played a major role in research and development departments of the automotive industry. During the years, a quantity of mechanical and electronic devices have been developed to make vehicles safer to provide protection to occupants and to other vehicles or people in the proximity of the vehicles.

With the evolution of computing devices and the rapid growth of computing power, new safety systems based on machine learning or deep learning algorithms or artificial intelligence have recently emerged. In some vehicles, embedded cameras take images of the surrounding environment and objects, locations, items, obstacles, or the like therein are identified to supply indications to the driver of the vehicle of a possible dangerous situation, or to provide data to automatic driving systems of the vehicle to assist or interact with the driving of the vehicle.

Usually, the training of such machine learning or deep learning algorithms is performed using global data, e.g. using images belonging to different parts of the world. Due to the variety of environments in which a vehicle can be used, machine learning algorithms trained on global data can fail in performing a correct identification of some items which are particular to a local area. This can affect the safety both of the driver of the vehicle and of the surroundings in the local area where the vehicle is present.

In addition, the training of machine learning or deep learning algorithms is commonly automatically performed by computing devices without or with a limited human user interaction. This model can lead to a wrong identification of object, items, location or the like in the environment where the user most often uses the vehicle.

Machine learning algorithms' performance is often influenced by the quality of the training data used to train them. Furthermore, it is usually difficult to acquire data to improve the model in view of the specific use of the vehicle and for the particular environment in which the vehicle is driven.

### SUMMARY OF THE INVENTION

It is an objective of the invention to provide a method for training a machine learning (e.g., deep learning) algorithm for correct item identification performed by a computing unit of a vehicle, wherein the computing unit comprises a processor, a machine learning unit, a communication unit, and a memory. The vehicle comprises a sensor, and the method comprises the steps of:
- triggering sensor data collection and controlling the sensor to acquire sensor data,
- transmitting the sensor data to the machine learning unit,
- optionally controlling the machine learning unit to transmit the data and information related to the data to a user interface configured to provide a representation of the data and instructions for a user to label the data, based on the information related to the data,
- assigning labelling information to the data, and
- controlling the machine learning unit to re-train a machine learning algorithm stored in the memory based on the data and optionally the labelling information.

Such a method can improve the functioning of the algorithm, particularly in local environments where general algorithms are not as accurate. Such improvements can result in an overall safer system.

It is another or alternative objective of the invention to provide method for training a machine learning algorithm wherein controlling the sensor to transmit sensor data to the machine learning unit comprises controlling the machine learning unit to pre-process the sensor data. Pre-processing can include any operation performed on the sensor data, for example, if the sensor data is an image, pre-processing can include one or more of contouring, luminosity or contrast adjustment, rescaling, edges detection, or the like. Such pre-processing can improve data labelling and/or visualisation or display.

It is another or alternative objective of the invention to provide a method for training a machine learning algorithm wherein triggering sensor data collection comprises triggering sensor data collection based on location information of the vehicle. For example, this can be location information indicating a frequently visited location and/or a location associated with item identification uncertainty above a specific threshold. This can result in very localized data collection, improving the algorithm for specific locations, for example, locations where the vehicle often travels or there is uncertainty in item identification.

It is yet another or an alternative objective of the invention to provide a method for training a machine learning algorithm wherein the location information is obtained from a geotracking device included in the vehicle. This can result in data collection without the need for user triggering, making the system less susceptible to human error.

It is yet another or an alternative objective of the invention to provide a method for training a machine learning algorithm wherein the location information is obtained from a second user input entered in the user interface unit indicating the location of the vehicle. This can be useful, for example, when a user hasn't yet travelled in certain areas frequently, but anticipates it in the future and can indicate that to the system.

It is yet another or an alternative objective of the invention to provide a method for training a machine learning algorithm wherein triggering sensor data collection comprises triggering sensor data collection based on a command input by the user in the user interface unit. Such a command input can be a simple way for the user to trigger the collection.

It is yet another or an alternative objective of the invention to provide a method for training a machine learning algorithm wherein triggering sensor data collection comprises triggering sensor data collection based on one or more of the following: a present date or on a time period passed from a last date on which training of the machine learning algorithm has been performed; a regular time interval; an identity of the user; and a triggering event. Any of these could be useful indicators that data collection would be helpful for training and improving the algorithm in certain aspects

It is yet another or an alternative objective of the invention to provide a method for training a machine learning algorithm wherein the sensor is a camera.

It is yet another or an alternative objective of the invention to provide a method for training a machine learning algorithm wherein the sensor data is an image or a video.

It is yet another or an alternative objective of the invention to provide a method for training a machine learning algorithm wherein transmitting the sensor data comprises storing the sensor data in the memory. This can allow for data storage until data can be processed and/or used by the system and/or user.

It is yet another or an alternative objective of the invention to provide a method for training a machine learning algorithm wherein the user interface is in or a part of the vehicle. Having the user interface in or part of the vehicle can be a convenient place for a user to interact with the system.

It is yet another or an alternative objective of the invention to provide a method for training a machine learning algorithm wherein the computing unit comprises a user interface unit and wherein the user interface, to which the pre-processed data and information related to the pre-processed data are transmitted and to which the first user input is entered, is the user interface unit included in the computing unit. This can be a convenient way for a user to input information into the system.

It is yet another or an alternative objective of the invention to provide a method for training a machine learning algorithm wherein pre-processing the data comprises executing the machine learning algorithm stored in the memory to pre-label the sensor data. Pre-labeling sensor data can reduce the work of a user to label data, and could in some cases eliminate the need for user input in labelling.

It is yet another or an alternative objective of the invention to provide a method for training a machine learning algorithm wherein information related to the data comprises an indication of at least one of a location, a time, an identity of the user using the vehicle, or a type of a format of the pre-processed data. Providing such data can help to train the algorithm to localized environments, for example, in relation to specific users, times, locations, etc.

It is another aspect of the invention to provide to provide a communication unit to perform a method for training a machine learning algorithm for correct item identification. Such a communication unit could be a computing unit.

It is another aspect of the invention to provide to provide a machine learning algorithm for correct item identification.

It is yet another aspect of the invention to provide a vehicle comprising a communication unit to perform a method for training a machine learning algorithm for correct item identification.

### BRIEF DESCRIPTION OF THE DRAWINGS

Further features and advantages of the invention will become apparent from the description of the invention by way of non-limiting and non-exclusive embodiments. These embodiments are not to be construed as limiting the scope of protection. The person skilled in the art will realize that other alternatives and equivalent embodiments of the invention can be conceived and reduced to practice without departing from the scope of the present invention. Embodiments of the invention will be described with reference to the accompanying drawings, in which like or same reference symbols denote like, same or corresponding parts, and in which
Figure 1 schematically represents a vehicle driving on a road and performing an identification of different objects;
Figure 2 shows a scheme of a computing unit of a vehicle configured to perform object identification and to train a machine learning algorithm;

Figure 3 schematically shows a user interface unit;
Figure 4 schematically shows a process for training a machine learning algorithm based on local data and performed by a continuous interaction between a vehicle and its user; Figure 5 schematically shows a process for training a machine learning algorithm based on local data and performed by a continuous interaction between a vehicle and a user acting on an electronic device external to the vehicle,
Figure 6 schematically shows a plurality of vehicle to which a process for training a machine learning algorithm can be applied.

### DETAILED DESCRIPTION OF EMBODIMENTS

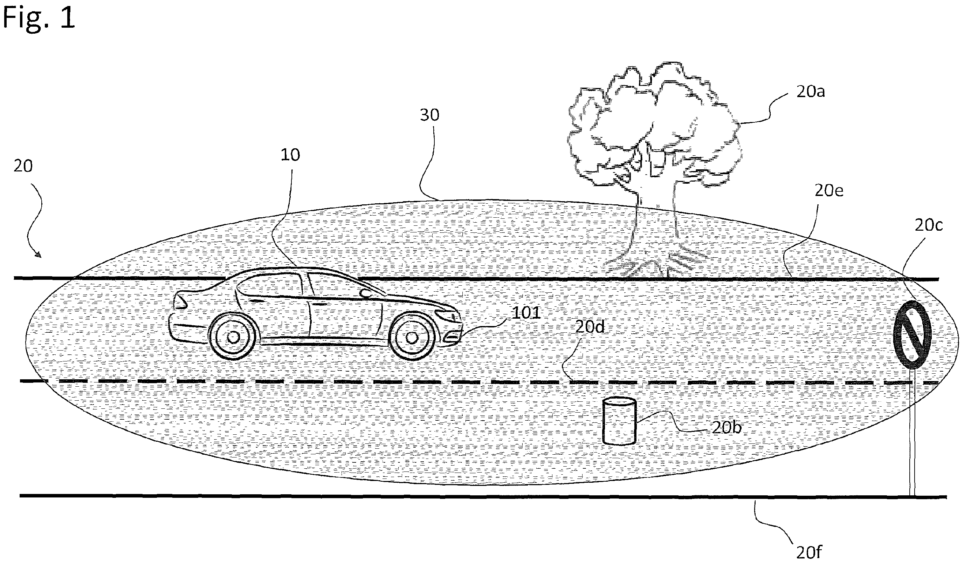

Fig. 1 schematically shows a vehicle 10 driving on a road 20 where different item or objects 20a, 20b, 20c, 20d, 20e, and 20f are present. Hereinafter, the term item will refer to any natural object, for example, a tree 20a, an animal, a rock, a human being, etc., or any artificial object, like road signals 20c, road markings 20d, 20e, and 20f, buildings, other vehicles, obstacles 20b and so on. In general, the term item will refer hereinafter to anything that can be sensed by the sensor of the vehicle 10. In addition, the term vehicle will refer hereinafter to any machine that transports people or goods such as a car, a van, a truck, a motorbike, a train, etc.

The vehicle 10 includes a sensor 101 for capturing data of the surrounding environment in a sensing volume 30. Examples of the sensor 101 may be a camera, a radar, a lidar, a depth sensor or the like. While one sensor 101 is shown in Fig. 1, in practice, the vehicle could include a number of different sensors with different placements around the vehicle, different abilities to collect different types of data, etc.

Depending on the sensor 101, the possible inclusion of additional sensors, and on the position(s) on the vehicle 10, the sensing volume 30 may correspond to the complete area around the vehicle (e.g., a full solid angle of 4π sr, or a portion thereof, having its centre corresponding to the position of the sensor 101 on the vehicle 10) or to a portion of the full solid angle covering a volume corresponding to a forward direction, e.g., the direction corresponding to the movement of the vehicle, to a backward direction opposite to the forward direction and/or to a lateral direction of the vehicle 10.

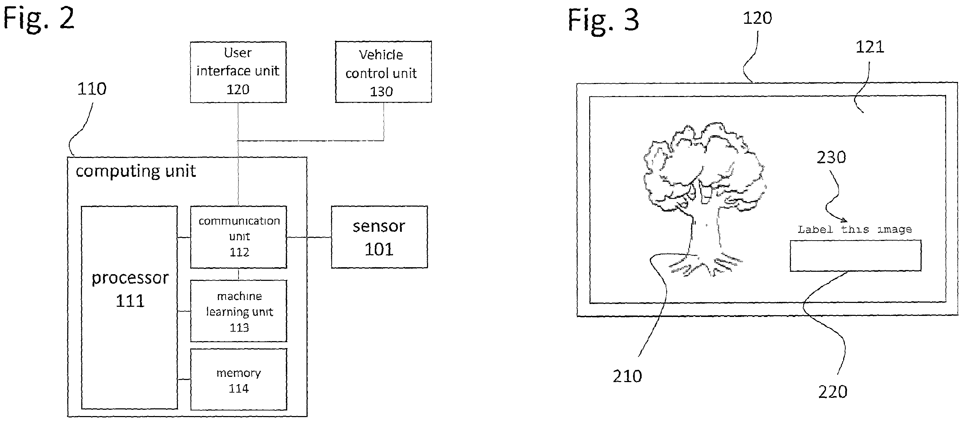

With reference to figure 2, the vehicle 10 further comprises a computing unit 110 connected to the sensor 101 (e.g., electrically connected), wherein the connection can be an electrical connection, a fiber connection, a wireless connection, or the like. The computing unit 110 comprises a processor 111, a communication unit 112 for receiving or transmitting data, a machine learning unit 113 for performing item identification and/or machine learning algorithm training, a memory 114 for storing data and instructions to execute item identification or machine learning algorithm training. The processor 111 is electrically connected to the communication unit 112, to the memory 114, and to the machine learning module 113. Although the communication unit 112 and the machine learning unit 113 are shown in figure 2 as separate elements, the communication unit 112 and/or the machine learning module 113 can be embedded in the processor 111.

The communication unit 112 is configured for allowing the transfer of data and/or signals between the elements of the computing unit 110 and, in general, of the vehicle 10. The communication unit 112 may also be configured for allowing a (wireless or wired) connection with other devices, e.g. computers, portable devices, servers, or the like, external to the vehicle 10.

The communication unit 112 may also connect to a server for downloading and/or uploading data related to the machine learning algorithm. In an example, the communication unit 112 allows a connection between the computing unit 120 and an external electronic device for performing operations on the external electronic device.

The vehicle 10 further comprises a user interface unit 120 and a vehicle control unit 130 connected to the communication unit 112. The user interface unit 120 is configured for displaying and/or outputting information and for allowing a user of the vehicle to enter a user input, e.g. data or commands, into the computing unit 110.

An example of user interface 120 is shown in figure 3. The user interface unit 120 comprises a display 121, optionally a touch screen, configured for displaying an image, an animated image, a video, or text 210, an input field 220 for allowing the user to enter a user input, and guiding information 230, e.g. a text, an image, an animated image, a video or the like. Guiding information 230 may include information related to a time, a weather condition, a location, a message, and/or instruction received from the computing unit 110 for guiding an interaction between the user and the computing unit 110.

The vehicle control unit 130 is configured for receiving data, related to the status and/or the functioning of the vehicle 10, obtained by different sensors (not shown) installed in the vehicle 10, like motion sensors, speed sensors, geotracking sensors, engine sensors, break sensors, light sensors, and the like. The vehicle control unit 130 may, in some cases, interact with electronic or mechanical parts of the vehicle 10 to control their functioning, for example, by interacting on the breaks, on the accelerator, on the fuel supply, on the lighting system, etc.

The sensor 101 is configured for acquiring sensor data, for example, a video, an image, an electronic (analog or digital) signal, etc., from the sensing volume 30 and transferring it to the processor 111 through the communication unit 112. The processor 111 transfers the acquired sensor data to the machine learning unit 113 or controls the communication unit 112 to directly transfer the acquired sensor data to the memory 114. Sensor data may be processed by the sensor 101 or the processor 111 before being transferred to the machine learning unit 113.

In one example, the processor 111 controls the user interface unit 120 to display information in the form of an icon, an image, or a text for triggering sensor data collection. Alternatively, the user interacts with the user interface unit 120 to manually request the triggering of sensor data collection. In another alternative, the processor 111 automatically makes a determination to trigger sensor data collection. In these cases, the processor 111 controls the sensor 101, through the communication unit 112, to acquire sensor data in the sensor volume 30. This can be automatically triggered due to, for example, a certain location which the vehicle is in, certain automatic triggering events such as sudden braking, etc. Such automatic triggering events can be events initiated by the driver, the system itself, the vehicle and/or outside forces that could provide useful information to the system. As an example, sudden braking could indicate a failure of a global algorithm, that something was not detected which triggered the sudden braking. Thus, the data collection could be especially useful in that situation to improve the algorithm and thereby reduce or eliminate the likelihood of needing to suddenly brake at that location in the future.

Once the sensor data is received by the machine learning unit 113, the machine learning unit 113 performs either item identification (labelling) of the sensor data or machine learning algorithm training, according to the instructions stored in the memory 114 and/or based on instructions received from the processor 111. Sensor data may be stored in the memory 114 and transferred from the memory 114 to the machine learning unit 113 when needed.

In one example, labelling of the sensor data can be automatically performed by the machine learning unit 113 using a generic (global) machine learning algorithm stored in the memory 14. Alternatively, labelling of sensor data can be manually performed by a user of the vehicle without the need of a pre-labelling performed by the machine-learning unit 113. Further options would be for a machine learning algorithm to be trained on unlabeled data in an unsupervised or a semi-supervised manner. However, as has been described above, machine learning algorithms trained with global data can underperform locally, for example, at a location where the vehicle is most often used. The result is that a model automatically trained with global data can fail in identifying items of a particular environment, thereby affecting the safety of either or both of the vehicle user and the surrounding environment.

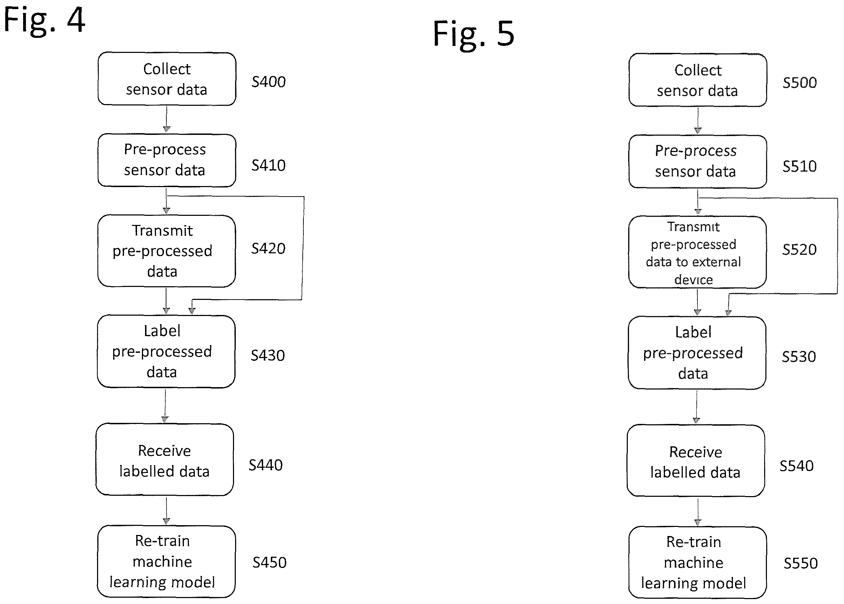

Figure 4 shows a process for training a machine learning algorithm based on local data and performed by a continuous interaction between the vehicle 10 and its user. Such a process, through the prompting of collecting and using local data, results in a better data attuned to specific locations and/or persons, thereby making for a safer experience in the areas where the vehicle is most often used.

The processor 111 and/or the machine learning unit 113 of the computing unit 110 determines whether to trigger S400 data collection.

In one example, the processor 111 determines to trigger sensor data collection based on location information of the vehicle. Location information can be obtained by a geotracking device included in the vehicle (or elsewhere) or by a user input entered in the user interface unit 120 indicating the location of the vehicle 10.

In another example, the processor 111 determines to trigger sensor data collection based on a command input by the user in the user interface unit 120.

In another example, the processor 111 determines to trigger sensor data collection based on a present date or based on a time period passed from a last date on which training of the machine learning algorithm has been performed. In another example, data collection is triggered by the processor 111 at regular time intervals and/or by specific events such as sudden acceleration or braking.

The user interface unit 120 may be configured for allowing a user of the vehicle to identify her(him)self so as to provide customized settings of the vehicle based on the user's identity. In this case, the processor 111 may trigger data collection based on the identity of the identified user.

When it is determined to trigger sensor data collection, the processor 111 controls the sensor 101 to collect sensor data S400 through the communication unit 112. Sensor data is collected by the sensor 101 and transmitted to the processor 111 through the computing unit 112. Sensor data may refer to any kind of data collected by the sensor, e.g. a video, video frames, an image, a signal, etc.

The processor 111 can query the vehicle control unit 130 to verify the motion status of the vehicle 10. Based on information received from the vehicle control unit 130, the processor 111 determines whether the vehicle 10 is in motion or at rest. When it is determined that the vehicle 10 is in motion, the processor 111 can transmit control signals to the memory 140 to store the received sensor data for future use.

If the processor 111 determines that the vehicle 10 is at rest, the received sensor data can either be stored in the memory 114 and transferred to the machine learning unit 113 or directly provided to the machine learning unit 113. The machine learning unit 113 performs training S450 of the machine-learning algorithm based on the received data.

Optionally, sensor data is provided to the machine learning unit 113 for pre-processing S410, wherein pre-processing includes any operation performed on the sensor data (e.g., graphical operations, ultrasounds, radar, etc). As an example, if the sensor data is an image, pre-processing S410 includes operations like contouring, luminosity or contrast adjustment, rescaling, edges detection, or the like.

Pre-processing of data by the machine learning unit 113 may also include executing the machine learning algorithm stored in the memory 140 to pre-label (identify) the sensor data or the pre-processed data, wherein pre-labelling the sensor data or the pre-processed data includes assigning S440 to them a pseudo-label for (re-)training the machine-learning algorithm. In this particular case, after the sensor data or the pre-processed data have been pre-labelled, (re-)training S450 of the machine-learning algorithm is performed by the machine-learning unit 113 based on the (pre-)labelled data.

In one embodiment, after pre-processing, the processor 111 can control the machine learning unit 113 to transmit to the user interface unit 120 the pre-processed data S420 together with information related to the pre-processed data. As shown in the Figure, this step can also be skipped and data can simply be labeled without user input.

Alternatively, if pre-processing is not performed, the processor 111 can control the machine learning unit 113 to transmit to the user interface unit 120 the sensor data together with information related to the sensor data.

Information related to the pre-processed data or to the sensor data can comprise one or more of: a request for manual labelling of the pre-processed data to a user of the vehicle 10; metadata related to the pre-processed data, e.g. a location, a time, an identity of the user using the vehicle, a type of a format of the pre-processed data, etc.; or instructions to be provided to the user. Pre-processed data or sensor data and related information can then be displayed on the display 121 of the user interface unit 120 as images, animated images, videos, or text.

In some systems, the machine-learning unit gives a preliminary label to the data, which may have been pre-processed. When preliminary labelled, information related to the pre-processed data typically includes a preliminary label assigned to the pre-processed data by the machine learning unit 113 and guiding information 230 requesting the user to confirm, deny or correct the pre-labelling, though not all embodiments require the confirmation or denial by the user.

Once the user has entered a user input in the input field 220 to manually label the pre-processed data or to confirm, deny or correct the pre-labelling according to the guiding information 230, the manually labelled data is transmitted by the user interface unit (120) in transmitting step S440 to the processor 111 through the communication unit 112.

The processor 111 transmits the manually labelled data or the machine labelled data to the machine learning unit 113 for performing a training S450 of the machine learning algorithm based on the labelled (or confirmed) data. The updated machine learning algorithm is then stored in the memory 114 for further use.

This method provides an iterative method of training a machine learning algorithm which makes use of the localized training and environment of the user. The method can also include continuous interaction between the vehicle user and the computing unit 110 of the vehicle to improve accuracy of labeling and collection. The advantage of this method is that the machine learning algorithm is trained with data obtained in the local environment where the vehicle 10 is present and under the continuous supervision of the user. This allows a better identification of the items present in such environment, thereby improving the overall safety of the user and, in general, of the environment where the vehicle 10 is located.

Although the method has been described in relation to the user interacting with a user interface unit 120 of the vehicle 10, the same method can be performed by a user interacting with an external electronic device having a user interface, a computer, a smartphone, a tablet, a smart television, etc. (wirelessly) connected with the communication unit 112 of the vehicle 10, or with very little user interaction.

This process is disclosed in more details in figure 5. The operations disclosed in steps S500, S510, and S550 correspond to the operations S400, S410, and S450, respectively, disclosed in relation to figure 4, to which reference is made.

In operation S510, the machine learning unit 113 optionally pre-processes the sensor data, as described above. The processor 111 controls the memory 140 to store the pre-processed data and the related information or controls the machine learning unit 113 to directly transmit pre-processed data and related information to the external electronic device through the communication unit 112. If pre-processed data is stored in the memory 140, the processor 111 controls the memory 114 to transmit the stored pre-processed data and related information to the external device through the communication unit 112. The transmission can be performed sequentially, as soon as pre-processed data and related information are stored in the memory or in one single instance by transmitting a series of pre-processed data and related information at once to the external electronic device.

Operation S530 corresponds to operation S430 performed in the external electronic device. Reference is made to the description of this operation disclosed in relation to figure 4. In the same way as the transmission of data from the vehicle 10 to the external electronic device, the transmission of manually or machine labelled data from the external electronic device to the computing unit 110 of the vehicle can be done sequentially or in a single instance by collecting a series of manually labelled data.

Once the user has entered a user input in the user interface of the external device to manually label the data or the machine has labelled the data in the pre-process step S510, the labelled data is transmitted (by the user interface of the external electronic device if done manually) in transmitting step S540 to the processor 111 of the computing unit 110 through the communication unit 112.

The advantage of the method disclosed in figure 5 is that the user does not need to be in the vehicle 10 to interact with the communication unit 110 for manual labelling and thereby improving the machine learning algorithm. This can allow for data collection via the sensor(s) at the time when the vehicle is in operation, and the user input for confirmation and/or labeling at a later moment when the user has more time available for the task.

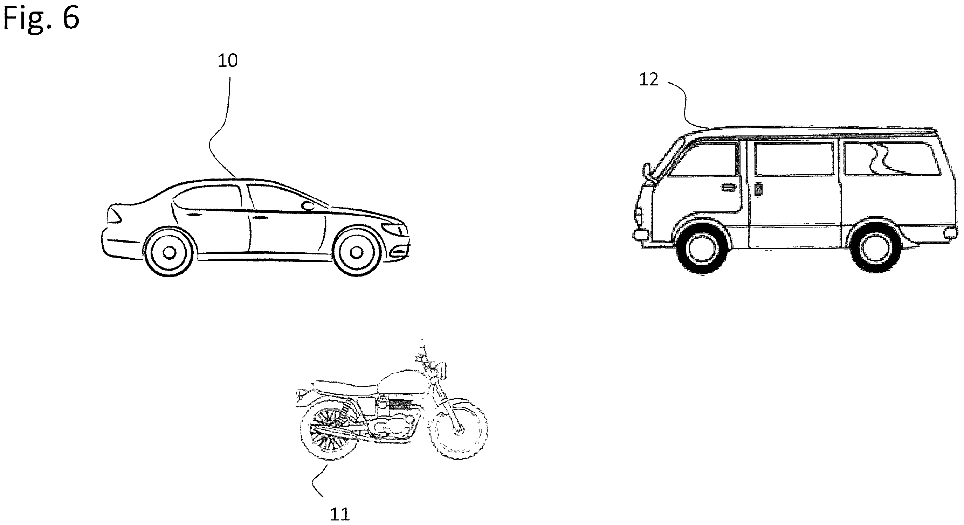

In case a person, a family, a company own more than one vehicle either of the same type or of different types, e.g. the car 10, the motorbike 11, and the van 12 of figure 6, it can be advantageous to use a common machine learning algorithm for item identification for all the vehicles. Each vehicle 10, 11, and 12 comprises units as the ones disclosed in relation to figures 2 and 3; and each vehicle 10, 11, and 12 can autonomously perform the methods disclosed in relation to figures 4 and 5.

In addition, vehicles 10, 11, and 12 can be configured for exchanging data related to the machine learning algorithm and/or to exchange pre-processed data the one with the other for jointly performing pre-labelling. The advantage of this system is that the higher number of connected vehicles can result in a larger data set for training the machine learning algorithm, and therefore a more accurate machine learning algorithm when trained on such a data set.

The invention must not be regarded as being limited to the preferred embodiments described above; a number of further variants and modifications are feasible without departing from the scope of the patent claims.

## Claims

1. A method for training a machine learning algorithm for correct item identification performed by a computing unit (110) of a vehicle (10), wherein the computing unit (110) comprises a processor (111), a machine learning unit (113), a communication unit (112), and a memory (114), and wherein the vehicle comprises a sensor (101), the method comprising the steps of:
- triggering (S400) sensor data collection and controlling the sensor (101) to acquire (S400) sensor data,
- transmitting the sensor data to the machine learning unit (113),
- optionally controlling the machine learning unit (113) to transmit (S420) the data and information related to the data to a user interface configured to provide a representation of the data and instructions for a user to label the data, based on the information related to the data,
- assigning (S440) labelling information to the data, and
- controlling the machine learning unit (113) to re-train (S450) a machine learning algorithm stored in the memory (114) based on the data and optionally labelling information.

2. The method of claim 1 wherein, when the method comprises the steps of:
- controlling the machine learning unit (113) to transmit (S420) the data and information related to the data to a user interface, and
- controlling the user interface unit (120) to display, on the display (121) of the user interface (120), the data and instructions to label the data, based on the information related to the data,
wherein the step of assigning (S440) labelling information of the data comprises receiving from the user interface (120) labelling information obtained by a first user input entered (S430) through the user interface and transferring the labelling information to the machine learning unit (113).

3. The method of any of claims 1 or 2, wherein controlling the sensor to transmit sensor data to the machine learning unit comprises controlling the machine learning unit (113) to pre-process (S410) the sensor data.

4. The method of any of the preceding claims, wherein triggering sensor data collection comprises triggering sensor data collection based on location information of the vehicle, preferably location information indicating a frequently visited location and/or a location associated with item identification uncertainty above a specific threshold.

5. The method of claim 4, wherein the location information is obtained from a geotracking device included in the vehicle, and/or from a second user input entered in the user interface unit (120) indicating the location of the vehicle.

6. The method of any of claims 1 or 2, wherein triggering sensor data collection comprises triggering sensor data collection based on a command input by the user in the user interface unit

7. The method of any of the preceding claims, wherein triggering sensor data collection comprises triggering sensor data collection based on one or more of the following: a present date or on a time period passed from a last date on which training of the machine learning algorithm has been performed; a regular time interval; an identity of the user and a triggering event.

8. The method of any of the preceding claims, wherein the sensor is a camera, and/or the sensor data is an image or a video

9. The method of any of the preceding claims, wherein transmitting the sensor data comprises storing the sensor data in the memory.

10. The method of any of the preceding claims, wherein the user interface is in or a part of the vehicle.

11. The method of any of the preceding claims, wherein the computing unit (110) comprises a user interface unit (120) and wherein the user interface, to which the pre-processed data and information related to the pre-processed data are transmitted and to which the first user input is entered, is the user interface unit (120) included in the computing unit (110) .

12. The method of claim 3, wherein pre-processing the data comprises executing the machine learning algorithm stored in the memory to pre-label the sensor data.

13. The method of any of the preceding claims, wherein information related to the data comprises an indication of at least one of a location, a time, an identity of the user using the vehicle, or a type of a format of the pre-processed data.

14. A computing unit (110) to perform the method of any one of the preceding claims, wherein the computing unit is preferably part of a vehicle.

15. A machine learning algorithm trained in accordance with the method according to any of the claims 1-13.
